# FASCICULE DE BREVET EUROPEEN

(11) **EP 4 354 108 B1**
(45) Date de publication et mention de la délivrance du brevet: **25.06.2025**
(21) Numéro de dépôt: 23202795.3
(22) Date de dépôt: 10.10.2023
(51) Int. Cl.: G01L 3/10, G01L 5/22

(54) **SYSTÈME DE DÉTERMINATION D'UN COUPLE ENTRE DEUX ORGANES TOURNANTS**
SYSTEM ZUR BESTIMMUNG EINES DREHMOMENTS ZWISCHEN ZWEI ROTIERENDEN TEILEN
SYSTEM FOR DETERMINING A TORQUE BETWEEN TWO ROTATING MEMBERS

(30) Priorité: 11.10.2022 FR 2210439
(43) Date de publication de la demande: 17.04.2024
(73) Titulaire: NTN Europe, 74000 Annecy (FR)
(72) Inventeur: BAUDU, Alexandre, 74010 Annecy Cedex (FR)
(74) Mandataire: Sayettat, Julien Christian

(56) Documents cités:
- EP-A1- 1 408 603
- FR-A1- 2 862 382
- FR-A1- 3 020 434

## Description

L'invention concerne un système de détermination d'un couple appliqué entre deux organes tournant autour d'un axe de rotation, ainsi qu'un module de transmission d'un couple entre un arbre tournant et un deuxième organe qui comprend un tel système.

L'invention s'applique en particulier à la détermination d'un couple appliqué entre deux organes intégrés dans une transmission d'un couple moteur à un véhicule, par exemple entre le moteur électrique ou le pédalier et la transmission mécanique d'un vélo à assistance électrique.

Pour ce faire, il est connu d'utiliser un corps d'épreuve présentant une bague intérieure solidaire en rotation de moyens d'accouplement dudit corps d'épreuve à un premier des organes, et une bague extérieure s'étendant autour de la bague intérieure en présentant des moyens d'accouplement dudit corps d'épreuve au deuxième des organes, lesdites bagues étant reliées de façon concentrique autour de l'axe de rotation par une structure déformable qui est agencée pour transmettre le couple entre les organes tout en autorisant un débattement angulaire entre lesdites bagues en fonction du couple appliqué entre les organes.

Un tel corps d'épreuve peut être instrumenté avec deux codeurs en équipant chacune des bagues d'un anneau portant une piste magnétique respectivement intérieure et extérieure qui est apte à émettre un signal périodique représentatif du déplacement en rotation de la bague correspondante. En particulier, chacune des pistes présente une succession de paires de pôles Nord et Sud pour former une piste magnétique multipolaire délivrant un signal magnétique pseudo-sinusoïdal.

Le système de détermination comprend alors un dispositif de détermination du couple, qui peut notamment comprendre un support portant deux capteurs respectivement intérieur et extérieur, chacun comprenant un motif d'éléments sensibles disposé à distance de lecture de la piste intérieure ou extérieure pour délivrer un signal représentatif de la position angulaire du codeur correspondant.

Les documents FR-2 816 051, FR-2 821 931, FR-2 862 382, EP1408603 A1 et FR 3020434 A1, décrivent l'utilisation d'un dispositif de comparaison de tels signaux qui est apte à déterminer un écart angulaire entre les bagues, et donc le couple appliqué en ce qu'il induit ledit angle par torsion de la structure déformable.

Dans les systèmes connus, se pose le problème de réglage de l'entrefer, c'est-à-dire de la distance de lecture entre les pistes des codeurs et les capteurs, qui doit être effectué de manière précise, stable et équivalente pour les deux capteurs, de manière à ne pas fausser la détermination du couple. En particulier, un tel réglage doit pouvoir être ajusté au cours de la durée de vie du module de transmission, notamment en cas de changement du corps d'épreuve.

Les moyens de réglage de l'entrefer doivent également présenter un encombrement axial minimal, notamment en étant contenus dans un carter, de manière à ne pas venir interférer avec l'extérieur dudit carter.

L'invention a pour but d'améliorer l'art antérieur en proposant notamment un système de détermination d'un couple qui est agencé pour résoudre les problèmes de réglage de l'entrefer relevés ci-dessus.

A cet effet, selon un premier aspect, l'invention propose un système de détermination d'un couple appliqué entre deux organes tournants autour d'un axe de rotation, ledit système comprenant :
- un corps d'épreuve présentant une bague intérieure solidaire en rotation de moyens d'accouplement dudit corps d'épreuve à un premier des organes, et une bague extérieure s'étendant autour de la bague intérieure en présentant des moyens d'accouplement dudit corps d'épreuve au deuxième des organes, lesdites bagues étant reliées de façon concentrique autour de l'axe par une structure déformable qui est agencée pour transmettre le couple entre les organes tout en autorisant un débattement angulaire entre lesdites bagues en fonction du couple appliqué entre lesdits organes ;
- deux codeurs respectivement intérieur solidaire en rotation de la bague intérieure et extérieur solidaire en rotation de la bague extérieure, chacun desdits codeurs portant une piste apte à émettre un signal périodique représentatif du déplacement en rotation de la bague correspondante ;
- un dispositif de détermination du couple comprenant un support portant un capteur intérieur et un capteur extérieur, chacun des capteurs comprenant un motif d'éléments sensibles disposé à distance de lecture de la piste intérieure ou extérieure pour délivrer un signal représentatif de la position angulaire du codeur correspondant, ledit dispositif comprenant des moyens de comparaison des signaux délivrés par chacun des capteurs pour déterminer un écart angulaire entre les bagues qui est fonction du couple appliqué ;
- un carter dans lequel sont logés le corps d'épreuve, les codeurs et le dispositif de détermination, ledit carter présentant une paroi externe présentant une cavité formant un logement dans lequel une platine est fixée, ladite platine étant associée au support au moyen d'une vis de réglage qui est agencée pour que la rotation de ladite vis induise une translation dudit support par rapport au corps d'épreuve pour permettre le réglage de la distance de lecture des pistes par les capteurs respectifs.

Selon un deuxième aspect, l'invention propose un module de transmission d'un couple entre un arbre tournant et un deuxième organe, ledit module comprenant un tel système de détermination, dans lequel la bague intérieure présente un alésage d'association autour de l'arbre tournant, ledit module comprenant un palier de montage en rotation dudit arbre au travers d'un orifice du carter.

D'autres objets et avantages de l'invention apparaîtront dans la description qui suit, faite en référence aux figures annexées, dans lesquelles :
[Fig.1] est une représentation partielle en perspective du pédalier d'un vélo à assistance électrique équipé d'un système de détermination de couple selon l'invention, la figure 1a étant une vue en perspective éclatée du système de la figure 1 montrant plus particulièrement le montage du corps d'épreuve ;
[Fig.2] est une vue en perspective éclatée du pédalier de la figure 1,
[Fig.2a] étant une coupe transversale partielle dudit pédalier centrée sur l'intérieur du carter,
[Fig.2b] étant une coupe partielle, suivant une direction D perpendiculaire à une direction radiale, dudit dispositif de détermination ;
[Fig.3a],
[Fig.4a],

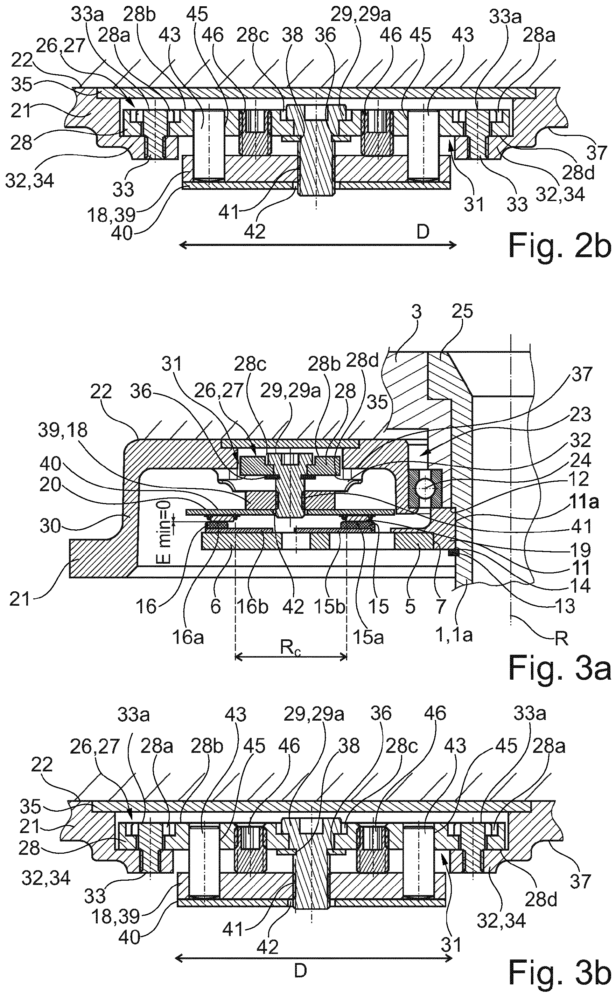

[Fig.3b] et

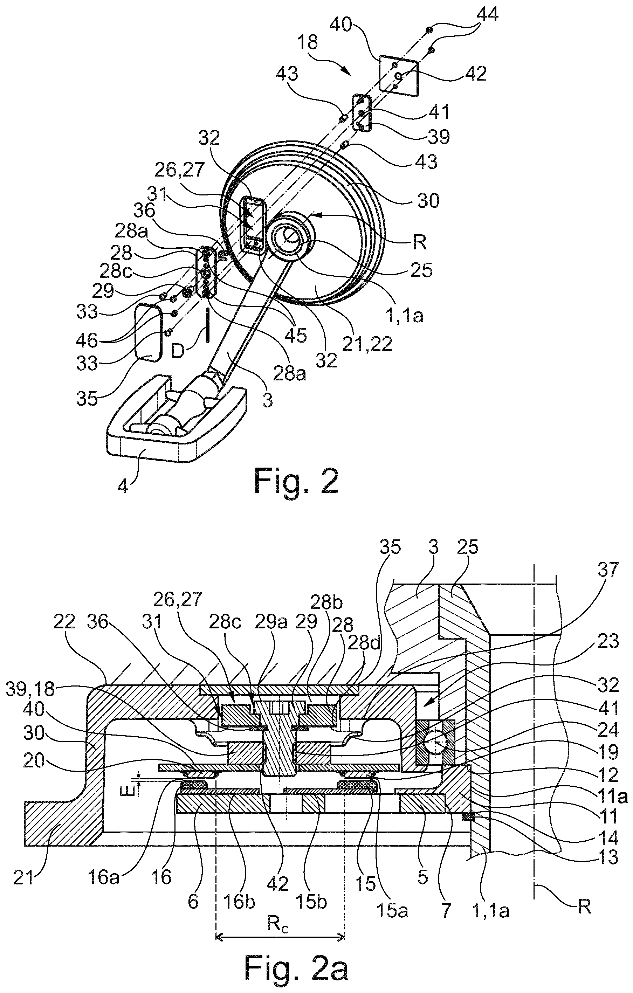

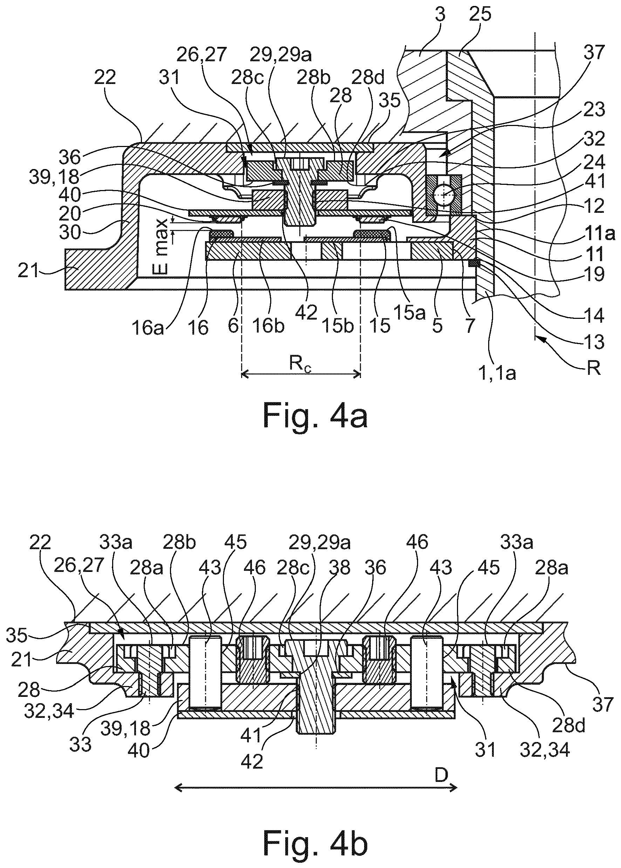

[Fig.4b] sont des vues analogues à respectivement la figure 2a et la figure 2b, dans lesquelles la distance de lecture est réglée avec une dimension respectivement minimale (figures 3a, 3b) et maximale (figure 4a, 4b).

En relation avec ces figures, on décrit ci-dessous un système de détermination d'un couple appliqué entre deux organes 1, 2 tournant autour d'un axe de rotation R, ainsi qu'un module de transmission d'un couple entre un arbre tournant 1a et un deuxième organe 2, 2a comprenant un tel système.

Dans cette description, les termes de positionnement dans l'espace sont pris en référence à l'axe R de rotation. En particulier, les termes « intérieur » et « extérieur » sont relatifs à une disposition respectivement proche et à distance de cet axe R, et les termes « axial » et « radial » sont relatifs à une disposition respectivement suivant cet axe R et s'éloignant ou se rapprochant de lui.

En particulier, le système permet la détermination d'un couple appliqué entre deux organes 1, 2 intégrés dans une transmission d'un couple moteur à un véhicule, par exemple au niveau du pédalier d'un vélo à assistance électrique.

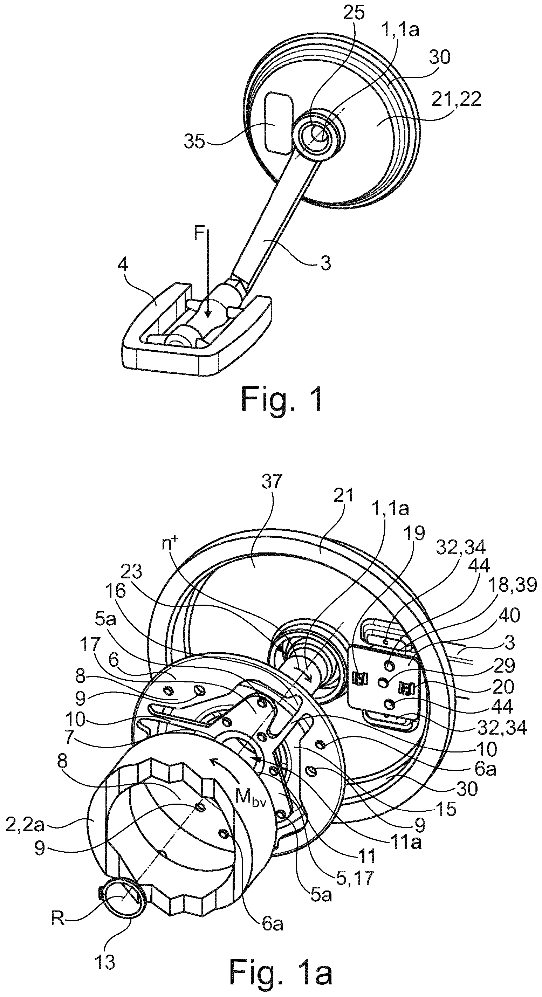

La figure 1 représente un pédalier d'un vélo à assistance électrique comprenant une manivelle 3 équipée d'une pédale 4, ladite manivelle étant montée sur un arbre 1a entraîné en rotation selon l'axe R pour former un organe 1 d'application d'un couple de pédalage M+ suivant le sens de pédalage.

Le système comprend un corps d'épreuve qui permet de transmettre le couple de pédalage M+ à l'autre des organes 2, qui, sur les figures, est représenté sous la forme d'un manchon 2a, par exemple d'un porte satellite d'un train épicycloïdal d'une boîte de vitesse motorisée, exerçant un couple Mbv.

Dans cette application, l'effort de pédalage F en bout de pédale 4 à considérer suivant la norme EN15194 : 2017 est de 1 500 N qui, avec une longueur de manivelle 3 de 165 mm, engendre un couple de pédalage M+ de l'ordre de 250 Nm. En particulier, le couple à transmettre par le corps d'épreuve n'est que dans un sens de rotation (celui représenté par la flèche M+ sur les figures), dans la mesure où l'autre sens correspond à la roue libre du vélo.

Le corps d'épreuve présente une bague intérieure 5 solidaire en rotation de moyens d'accouplement dudit corps d'épreuve au premier organe 1, ainsi qu'une bague extérieure 6 s'étendant autour de la bague intérieure 5 en présentant des moyens d'accouplement dudit corps d'épreuve au deuxième organe 2.

En relation avec les figures, la bague intérieure 5 présente un alésage 7 équipé des moyens d'accouplement sur l'arbre, par exemple sous la forme d'un taraudage ou de cannelures.

S'agissant de l'accouplement à l'autre organe 2, les figures représentent une paroi circonférentielle intérieure de la bague extérieure 6 qui présente au moins un lobe radial 8 qui est équipé d'un moyen 9 de fixation de ladite bague extérieure sur le manchon 2a. En particulier, trois lobes 8 à 120° sont prévus, chacun d'eux présentant un orifice 9 de fixation, notamment par une goupille ou par vissage dans un orifice complémentaire du manchon 2a.

Les bagues 5, 6 sont reliées de façon concentrique autour de l'axe R par une structure déformable qui est agencée pour transmettre le couple entre les organes 1, 2 tout en autorisant un débattement angulaire entre lesdits organes en fonction du couple appliqué entre lesdits organes.

En particulier, le couple résultant des couples de pédalage M+ sur la bague intérieure 5 et du couple Mbv appliqué par le manchon 2a sur la bague extérieure 6 induit une torsion entre les bagues 5, 6, et donc un déplacement angulaire relatif desdites bagues suivant un angle de torsion qui est fonction dudit couple.

Dans le mode de réalisation représenté, la structure déformable comprend un ensemble de branches 10 réparties angulairement entre les bagues 5, 6. En particulier, les branches 10 et les bagues 5, 6 sont formées d'une seule pièce, notamment par emboutissage et/ou par découpage d'un flan en matériau métallique.

Les branches 10 sont inclinées dans le sens inverse de la rotation, ce qui engendre un bras de levier qui, en sollicitant les branches 10 en traction, réduit les contraintes d'une manière très efficace avec comme contrepartie une augmentation de la raideur.

Sur les figures, le corps d'épreuve comprend trois branches 10 qui sont séparées par un secteur dépourvu de branche. En particulier, les secteurs dépourvus de branche s'étendent sur un angle qui est supérieur à 60°, les lobes 8 s'étendant chacun dans un secteur dépourvu de branche.

Pour faciliter la réalisation de l'accouplement de la bague intérieure 5 au premier organe 1, une noix 11 d'accouplement du corps d'épreuve avec l'arbre tournant 1a est rapportée en étant fixée dans l'alésage 7, notamment en étant emmanchée dans ledit alésage.

Cette réalisation permet une fabrication simplifiée des bagues 5, 6 et de la structure déformable, notamment par emboutissage, et d'usiner séparément la noix d'accouplement 11 avant sa fixation. Outre le bénéfice économique de la formation du corps par emboutissage, la bague intérieure 5 peut être réalisée avec une dimension juste suffisante pour la fixation de la noix 11, afin de bénéficier d'un corps d'épreuve compact tout en maximisant la longueur des branches déformables 10.

En particulier, la noix 11 peut présenter un alésage 11a permettant un accouplement du corps d'épreuve sur un arbre 1a du premier organe 1, ledit alésage étant équipé d'un taraudage ou de cannelures d'accouplement. Sur les figures, la noix 11 est montée en butée axiale sur un épaulement radial 12 formé à cet effet sur l'arbre tournant 1a, et est immobilisée axialement entre ledit épaulement radial et une rondelle élastique 13 de type « circlip » montée dans une gorge annulaire 14 formée en périphérie sur ledit arbre tournant.

De façon avantageuse, l'alésage 7 de la bague intérieure 5 peut présenter des moyens géométriques, par exemple des cannelures, la périphérie extérieure de la noix 11 présentant des moyens géométriques complémentaires, par exemple des cannelures complémentaires, pour fiabiliser la tenue en rotation de ladite noix dans ledit alésage.

Le système comprend un dispositif de détermination de l'angle entre les bagues 5, 6 qui, notamment en tenant compte de la raideur de la structure déformable, est fonction du couple appliqué.

Pour ce faire, le système comprend deux codeurs, parmi lesquels un codeur intérieur 15 solidaire en rotation de la bague intérieure 5 et un codeur extérieur 16 solidaire en rotation de la bague extérieure 6.

En particulier, chaque codeur 15, 16 comprend un anneau fixé à respectivement une bague 5, 6 et portant une piste magnétique respectivement intérieure 15a et extérieure 16a qui est apte à émettre un signal périodique représentatif du déplacement en rotation de la bague 5, 6 correspondante.

Dans le mode de réalisation représenté, chacun des anneaux est porté par une armature respectivement intérieure 15b et extérieure 16b, la bague intérieure 5 - respectivement extérieure 6 - présentant des moyens de fixation de l'armature intérieure 15b - respectivement extérieure 16b - sur elle.

En particulier, chacune des bagues 5, 6 présente des orifices 5a, 6a de fixation des armatures 15b, 16b, notamment par vissage ou rivetage. En relation avec la figure 1a, la bague intérieure 5 présente une paroi circonférentielle extérieure pourvue de trois lobes radiaux 17, chaque bague 5, 6 présentant trois orifices 5a, 6a de fixation disposés à 120° les uns des autres en étant formés sur chacun de ses lobes 8, 17.

Selon une réalisation, une succession de paires de pôles Nord et Sud est aimantée sur respectivement un anneau des codeurs 15, 16 pour former une piste magnétique multipolaire 15a, 16a apte à émettre un signal magnétique de forme pseudo-sinusoïdale.

Les anneaux des codeurs 15, 16 peuvent comprendre chacun une matrice annulaire, par exemple réalisée à base d'un matériau plastique ou élastomère, dans laquelle sont dispersées des particules magnétiques, notamment des particules de ferrite ou de terres rares comme le NdFeB, lesdites particules étant aimantées pour former les pistes magnétiques 15a, 16a.

Le système comprend en outre un dispositif de détermination du couple qui comprend :
- un support 18 portant un capteur intérieur 19 et un capteur extérieur 20, chacun desdits capteurs comprenant un motif d'éléments sensibles disposé à distance de lecture de la piste intérieure 15a - respectivement de la piste extérieure 16a - pour délivrer un signal représentatif de la position angulaire du codeur 15, 16 correspondant ;
- des moyens de comparaison des signaux délivrés par chacun des capteurs 19, 20 pour déterminer un écart angulaire entre les bagues 5, 6 qui est fonction du couple appliqué.

Chaque capteur 19, 20 peut comprendre un motif d'au moins deux éléments sensibles, notamment une pluralité d'éléments sensibles alignés, tel que décrit dans les documents FR-2 792 403, EP-2 602 593 et EP-2 602 594.

Les éléments sensibles peuvent être à base d'un matériau magnétorésistif dont la résistance varie en fonction du signal magnétique de la piste 15a, 16a à détecter, par exemple de type AMR, TMR ou GMR, ou d'une sonde à effet Hall.

Selon une réalisation, la position angulaire peut être déterminée de façon incrémentale au moyen du signal émis par une piste magnétique 15a, 16a. En particulier, les capteurs 19, 20 peuvent être agencés pour délivrer des signaux carrés incrémentaux en quadrature, les moyens de comparaison comprenant des moyens de comptage indiquant la position angulaire de chacun des codeurs 15, 16 et des moyens de soustraction permettant de calculer la différence entre lesdites positions angulaires, notamment tels que décrit dans les documents FR-2 816 051, FR-2 821 931 et FR-2 862 382.

Selon une réalisation, la position angulaire peut être déterminée de façon absolue, c'est-à-dire par rapport à une position de référence, en prévoyant une piste magnétique secondaire ou un codage spécifique sur l'anneau d'un codeur 15, 16.

En relation avec les figures, le système de détermination comprend en outre un carter 21 dans lequel sont logés le corps d'épreuve, les codeurs 15, 16 et le dispositif de détermination.

En particulier, le carter 21 comprend une paroi externe 22 pourvue d'un orifice 23 au travers duquel l'arbre tournant 1a est monté en rotation au moyen d'un palier à roulement 24, ledit arbre tournant présentant un embout 25 saillant de ladite paroi externe qui est équipé de la manivelle 3 d'application d'un couple de pédalage M+, qui est disposée en regard de ladite paroi externe.

La paroi externe 22 présente une cavité 26 formant un logement 27 dans lequel une platine 28 est fixée, ladite platine étant associée au support 18 au moyen d'une vis de réglage 29 qui est agencée pour que la rotation de ladite vis induise une translation dudit support par rapport au corps d'épreuve, de manière à permettre un réglage de la distance E de lecture des pistes 15a, 16a par les capteurs 19, 20 respectifs.

Sur les figures, la paroi externe 22 du carter 21 est entourée d'une jupe 30 à l'intérieur de laquelle la vis de réglage 29 est disposée, notamment de manière à être intégralement contenue à l'intérieur dudit carter.

De façon avantageuse, tout le dispositif de détermination du couple est contenu entre la paroi externe 22 et la face de lecture des pistes 15a et 16a. Ainsi, on intègre le système de réglage de la distance E dans un volume restreint en hauteur tout en s'assurant que la paroi externe 22 du carter 21 reste complètement dégagée sans aucune pièce qui dépasse (ce qui entraine la nécessité que tous les débattements mécaniques soient contenus dans cette enveloppe disponible) et en permettant de pouvoir assurer une étanchéité aisée par l'intermédiaire d'une trappe d'accès 35.

La cavité 26 présente une ouverture 31 qui débouche à l'intérieur du carter 21, en présentant deux rebords 32 auxquels la platine 28 est associée en recouvrant ladite ouverture. Dans le mode de réalisation représenté, l'ouverture 31 présente une géométrie rectangulaire analogue à celle de la platine 28. Les rebords 32 sont formés sur les petits côtés de l'ouverture 31, lesdits rebords étant opposés suivant une direction D qui est perpendiculaire à la direction radiale définissant le plan de coupe des figures 2b, 3b et 4b.

La platine 28 est fixée dans son logement 27 au moyen de deux vis 33 qui sont chacune associée à respectivement un rebord 32. Pour limiter l'encombrement axial des vis de fixation 33 dans le logement 27, la platine 28 comprend deux lamages d'extrémité 28a sur chacun desquels la tête d'actionnement 33a de respectivement une vis 33 est disposée en retrait de la surface supérieure 28b de ladite platine.

Par ailleurs, chaque rebord 32 présente un bossage 34 formé en relief de la paroi interne 37 du carter 21, de manière à former de la matière pour fiabiliser le vissage de ladite platine tout en limitant l'encombrement axial dudit vissage dans le logement 27. Cet agencement permet également d'éviter que les vis 33 ne fassent saillie à l'intérieur du carter 21, et ainsi d'éviter leur interférence avec les capteurs 19, 20 et/ou les codeurs 15, 16.

Selon une réalisation, les rebords 32 et les petits côtés de la platine 28 peuvent être pourvus d'une structure de détrompage pour indiquer le sens et la position de montage à respecter pour fixer ladite platine dans son logement 27.

De façon avantageuse, la vis de réglage 29 présente une tête d'actionnement 29a qui est disposée dans le logement 27 de la cavité 26 sans dépasser axialement au-delà de la paroi externe 22, de manière à ne pas interférer avec la manivelle 3 du pédalier, et ainsi ne pas entraver l'actionnement dudit pédalier.

Pour ce faire, la platine 28 comprend un lamage central 28c sur lequel la tête d'actionnement 29a est disposée en retrait de la surface supérieure 28b de ladite platine. En particulier, dans le mode de réalisation représenté, la vis de réglage 29 présente un diamètre plus important que les vis de fixation 33 et est agencée de manière à ce que sa tête d'actionnement 29a dépasse légèrement de la surface supérieure 28b de la platine 28, par opposition aux têtes 33a desdites vis de fixation, qui sont toutes deux disposées dans le prolongement de ladite surface supérieure. Ainsi, la vis de réglage 29 est plus facilement repérable par un opérateur, ce qui permet d'éviter une confusion entre ladite vis de réglage et les vis de fixation 33.

De façon avantageuse, la cavité 26 est équipée d'une trappe 35 de fermeture notamment étanche, qui est disposée dans le prolongement de la paroi externe 22. La tête 29a est disposée sous la trappe 35, notamment en ce que la vis de réglage 29 est agencée pour que sa tête d'actionnement 29a soit en retrait de la surface de contact entre la trappe 35 et le logement 27, un jeu fonctionnel devant rester entre la vis 29 et la trappe 35.

Ainsi, le dispositif de détermination, et de façon plus générale l'intérieur du carter 21, est protégé de l'environnement extérieur lorsque la trappe 35 est présente, de manière à éviter l'entrée par la cavité 26 de polluants extérieurs tels que de l'eau, de la poussière et/ou de la boue. Par ailleurs, l'absence de protubérance axiale au niveau de la trappe 35 permet d'éviter son interférence avec la manivelle 3 du pédalier.

En particulier, le dispositif de détermination tout comme l'ensemble des éléments internes au carter 21 peuvent baigner constamment dans un bain d'huile, la trappe permettant de garantir que l'huile ne s'échappe pas du carter 21 ce qui entrainerait une dégradation rapide du système mécanique de transmission et une casse potentielle des éléments d'entrainement.

La vis de réglage 29 est disposée en rotation au travers de la platine 28 en étant immobilisée en translation, et est montée en liaison hélicoïdale dans le support 18 pour permettre un déplacement en translation dudit support par rotation de ladite vis de réglage.

Pour ce faire, la vis de réglage 29 est fixée à la platine 28 au moyen d'un anneau d'arrêt métallique 36, par exemple de type « truarc », qui est disposé dans une gorge 38 prévue à cet effet sous la tête d'actionnement 29a de ladite vis de réglage, et qui vient en butée axiale sous la surface inférieure 28d de ladite platine.

En particulier, l'anneau d'arrêt 36 peut être agencé pour limiter tout jeu selon l'axe de la vis 29 dudit anneau dans la gorge 38, par exemple en réalisant un bombage par déformation locale dudit anneau. Ainsi, l'anneau 36 peut remplir une fonction ressort, afin de limiter les jeux axiaux dudit anneau dans la gorge 38, et ainsi d'éviter l'emploi d'une rondelle ressort supplémentaire.

Le support 18 comprend une plaque 39 sur laquelle est associée une carte 40 d'un circuit imprimé portant les capteurs 19, 20, la vis de réglage 29 étant associée à ladite plaque. La plaque support 39 liée à la carte électronique 40 participe à donner une rigidité à cet ensemble. En particulier, la carte 40 est associée à la plaque 39 au moyen de deux vis 44 de fixation.

De façon avantageuse, l'implantation des deux vis 44 de fixation de la carte 40 sur la plaque 39 est prévue pour que les têtes desdites vis tombent entre les deux codeurs 15, 16, ce qui permettra de s'affranchir de tout risque de collision lors de la mise en contact entre lesdits codeurs et les capteurs 19, 20 lors de l'opération de réglage. En outre, la vis de réglage 29 est également comprise entre les deux codeurs 15, 16.

La vis de réglage 29 est montée dans un trou taraudé 41 formé dans la plaque 39 pour permettre la translation de ladite plaque par rotation de ladite vis de réglage, et la carte 40 présente un orifice 42 aligné avec ledit trou taraudé par lequel passe l'extrémité de la vis de réglage 29.

Comme représenté sur les figures 2a, 3a et 4a, les capteurs 19, 20 sont espacés d'une distance radiale R_{c}, et la vis de réglage 29 est associée au support 18 au milieu de cette distance R_{c}. Ainsi, on permet un réglage simultané de la distance de lecture E des deux capteurs 19, 20 au moyen de la vis 29, et ce avec un bon équilibrage entre lesdits réglages.

La platine 28 est associée au support 18 au moyen d'au moins une goupille 43 qui est agencée pour immobiliser en rotation relative ledit support et ladite platine. Sur les figures, la platine 28 est associée au support 18 au moyen de deux goupilles 43 qui sont disposées de part et d'autre de la vis de réglage 29 en étant alignées suivant la direction D présentée précédemment.

Chaque goupille 43 est fixée à l'un parmi le support 18 et la platine 28, et est montée en coulissement par rapport à l'autre parmi ledit support et ladite platine.

Dans le mode de réalisation représenté, chaque goupille 43 est fixée dans le support 18 et est montée en coulissement dans respectivement un orifice 45 formé dans la platine 28, de manière à assurer un guidage en translation entre le support 18 et ladite platine sur une course de dimension réduite, mais suffisante pour absorber les variations dimensionnelles des composantes entrant dans la chaine de cote pouvant avoir un impact sur la distance de lecture E des capteurs 19, 20.

La platine 28 comprend en outre au moins une vis de pression 46 qui est agencée pour pouvoir être mise en appui sur le support 18 lorsqu'il est positionné à une distance de lecture E voulue, afin de garantir l'immobilisation dudit support, et donc de ladite distance de lecture.

Dans le mode de réalisation représenté, le système comprend deux vis de pression 46 disposées de part et d'autre de la vis de réglage 29 en étant alignées suivant la direction D.

De façon avantageuse, les goupilles 43, les vis de pression 46 et la vis de réglage 29 sont toutes alignées suivant la direction D, et notamment perpendiculairement à l'axe de lecture des capteurs 19, 20, tout en étant sensiblement équiréparties, chacune des vis de pression 46 étant disposée entre la vis de réglage 29 et une goupille 43. Ainsi, on limite les risques de mise en biais de la carte 40 portant les capteurs 19, 20 lors du réglage de la vis 29, ainsi que lors de l'immobilisation du réglage en serrant les vis de pression 46.

Le dispositif est agencé pour permettre un réglage de la distance de lecture commune E entre les codeurs 15, 16 et capteurs 19, 20 sur une plage de valeurs de Eₘᵢₙ à Eₘₐₓ allant de 0 à 2,4 mm. En particulier, pour obtenir le réglage souhaité, on peut, en partant de la position de contact codeurs 15, 16 / capteurs 19, 20 représentée sur les figures 3a, 3b, correspondant à la distance de lecture minimale Eₘᵢₙ (nulle) :
- dévisser la vis de réglage 29 d'un certain angle, par exemple d'un tour, jusqu'à atteindre la distance E souhaitée, puis serrer les vis de pression 46 au contact de la plaque support 18, 39, afin de maintenir le réglage de la distance E par mise en contrainte du filetage de ladite vis de réglage dans ladite plaque support ; ou
- serrer légèrement les vis de pression 46 pour les mettre en appui sur la plaque support 18, 39, puis desserrer lesdites vis de pression d'un certain angle, par exemple une moitié de tour, pour obtenir une distance correspondant à la distance de lecture E voulue, avant de serrer la vis de réglage 29 pour assurer un contre-effort de blocage en position de ladite plaque à ladite distance de lecture souhaitée. En particulier, cette solution n'induit pas de rattrapage de jeu ni de mise en biais du support 18.

La plage de réglage de la distance E de lecture commune entre les codeurs 15, 16 et capteurs 19, 20 doit permettre de conserver tout jeu mécanique entre les différents éléments en mouvement composant le dispositif de détermination du couple, notamment :
- entre les goupilles 43, les vis de pression 46 et la surface de contact entre la trappe 35 et le logement 27, tout en conservant des longueurs de guidage en prise admissibles des éléments ;
- entre l'anneau 36 et la plaque 39 du support 18 ;
- entre le pourtour interne de l'ouverture 31 et le pourtour externe de la plaque 39 du support 18 ;
- entre le bas de la vis 29 et les codeurs 15, 16.

## Revendications

1. Système de détermination d'un couple appliqué entre deux organes tournants (1, 2) autour d'un axe de rotation (R), ledit système comprenant :
- un corps d'épreuve présentant une bague intérieure (5) solidaire en rotation de moyens d'accouplement dudit corps d'épreuve à un premier des organes (1), et une bague extérieure (6) s'étendant autour de la bague intérieure (5) en présentant des moyens d'accouplement dudit corps d'épreuve au deuxième des organes (2), lesdites bagues étant reliées de façon concentrique autour de l'axe (R) par une structure déformable qui est agencée pour transmettre le couple entre les organes (1, 2) tout en autorisant un débattement angulaire entre lesdites bagues en fonction du couple appliqué entre lesdits organes ;
- deux codeurs respectivement intérieur (15) solidaire en rotation de la bague intérieure (5) et extérieur (16) solidaire en rotation de la bague extérieure (6), chacun desdits codeurs portant une piste (15a, 16a) apte à émettre un signal périodique représentatif du déplacement en rotation de la bague (5, 6) correspondante ;
- un dispositif de détermination du couple comprenant un support (18) portant un capteur intérieur (19) et un capteur extérieur (20), chacun des capteurs (19, 20) comprenant un motif d'éléments sensibles disposé à distance de lecture (E) de la piste intérieure (15a) ou extérieure (16a) pour délivrer un signal représentatif de la position angulaire du codeur (15, 16) correspondant, ledit dispositif comprenant des moyens de comparaison des signaux délivrés par chacun des capteurs (19, 20) pour déterminer un écart angulaire entre les bagues (5, 6) qui est fonction du couple appliqué ;
- un carter (21) dans lequel sont logés le corps d'épreuve, les codeurs (15, 16) et le dispositif de détermination, ledit carter présentant une paroi externe (22) ;
ledit système étant **caractérisé en ce que** la paroi externe (22) présente une cavité (26) formant un logement (27) dans lequel une platine (28) est fixée, ladite platine étant associée au support (18) au moyen d'une vis de réglage (29) qui est agencée pour que la rotation de ladite vis induise une translation dudit support par rapport au corps d'épreuve pour permettre le réglage de la distance de lecture (E) des pistes (15a, 16a) par les capteurs (19, 20) respectifs.

2. Système de détermination d'un couple selon la revendication 1, **caractérisé en ce que** la vis de réglage (29) est disposée en rotation au travers de la platine (28) en étant immobilisée en translation, ladite vis étant montée en liaison hélicoïdale dans le support (18).

3. Système de détermination d'un couple selon l'une des revendications 1 ou 2, **caractérisé en ce que** la cavité (26) est équipée d'une trappe (35) de fermeture notamment étanche, ladite trappe étant disposée dans le prolongement de la paroi externe (22).

4. Système de détermination d'un couple selon l'une quelconque des revendications 1 à 3, **caractérisé en ce que** la vis de réglage (29) présente une tête d'actionnement (29a) qui est disposée dans le logement (27) de la cavité (26) sans dépasser axialement au-delà de la paroi externe (22).

5. Système de détermination d'un couple selon l'une quelconque des revendications 1 à 4, **caractérisé en ce que** le support (18) comprend une plaque (39) sur laquelle est associée une carte (40) d'un circuit imprimé, la vis de réglage (29) étant associée à ladite plaque.

6. Système de détermination d'un couple selon l'une quelconque des revendications 1 à 5, **caractérisé en ce que** les capteurs (19, 20) sont espacés d'une distance radiale (R_{c}), la vis de réglage (29) étant associée au support (18) au milieu de ladite distance.

7. Système de détermination d'un couple selon l'une quelconque des revendications 1 à 6, **caractérisé en ce que** la platine (28) est associée au support (18) au moyen d'au moins une goupille (43) qui est agencée pour immobiliser en rotation relative ledit support et ladite platine.

8. Système de détermination d'un couple selon la revendication 7, **caractérisé en ce que** la platine (28) est associée au support (18) au moyen de deux goupilles (43) qui sont disposées de part et d'autre de la vis de réglage (29) en étant alignées suivant une direction (D) qui est perpendiculaire à une direction radiale.

9. Système de détermination d'un couple selon l'une quelconque des revendications 1 à 8, **caractérisé en ce que** la platine (28) comprend au moins une vis de pression (46) qui est agencée pour pouvoir être mise en appui sur le support (18) lorsqu'il est positionné à une distance de lecture (E) donnée.

10. Système de détermination d'un couple selon la revendication 9, **caractérisé en ce que** deux vis de pression (46) sont disposées de part et d'autre de la vis de réglage (29) en étant alignées suivant une direction (D) qui est perpendiculaire à une direction radiale.

11. Système de détermination d'un couple selon l'une quelconque des revendications 1 à 10, **caractérisé en ce que** la cavité (26) présente une ouverture (31) présentant deux rebords (32), la platine (28) recouvrant ladite ouverture en étant associée audit rebords.

12. Système de détermination d'un couple selon la revendication 11, **caractérisé en ce que** les rebords (32) présentent chacun un bossage (34) qui est formé en relief de la paroi interne (37) du carter (21).

13. Système de détermination d'un couple selon l'une quelconque des revendications 1 à 12, **caractérisé en ce que** la structure déformable comprend un ensemble de branches (10) réparties angulairement entre les bagues (5, 6).

14. Module de transmission d'un couple entre un arbre tournant (1a) et un deuxième organe (2, 2a), ledit module comprenant un système de détermination d'un couple selon l'une quelconque des revendications 1 à 13 dans lequel la bague intérieure (5) présente un alésage (7) d'association autour de l'arbre tournant (1a), ledit module comprenant un palier (24) de montage en rotation dudit arbre au travers d'un orifice (23) du carter (21).

15. Module de transmission d'un couple selon la revendication 14, **caractérisé en ce que** l'arbre (1a) présente un embout (25) saillant de la paroi externe (22) du carter (21), ledit embout étant équipé d'une manivelle (3) d'application d'un couple (M+) qui est disposée en regard de ladite paroi externe.

## Patentansprüche

1. System zur Bestimmung eines Drehmoments, das zwischen zwei um eine Drehachse (R) rotierenden Teilen (1, 2) aufgebracht wird, wobei das System Folgendes umfasst:
- einen Prüfkörper, der einen Innenring (5) aufweist, der mit Mitteln zur Kopplung des Prüfkörpers an ein erstes der Teile (1) drehfest verbunden ist, und einen Außenring (6), der sich um den Innenring (5) herum erstreckt und Mittel zur Kopplung des Prüfkörpers an das zweite der Teile (2) aufweist, wobei die Ringe um die Achse (R) durch eine verformbare Struktur konzentrisch verbunden sind, die angeordnet ist, um das Drehmoment zwischen den Teilen (1, 2) zu übertragen, indem sie eine Winkelauslenkung zwischen den Ringen in Abhängigkeit des Drehmoments zulässt, das zwischen den Teilen aufgebracht wird;
- zwei Codierer, die jeweils innen (15) mit dem Innenring (5) drehfest verbunden und außen (16) mit dem Außenring (6) drehfest verbunden sind, wobei jeder der Codierer eine Spur (15a, 16a) trägt, die in der Lage ist, ein periodisches Signal auszusenden, das für die Drehverschiebung des entsprechenden Rings (5, 6) repräsentativ ist;
- eine Vorrichtung zur Bestimmung des Drehmoments, das eine Halterung (18) umfasst, die einen inneren Sensor (19) und einen äußeren Sensor (20) trägt, wobei jeder der Sensoren (19, 20) ein Muster von empfindlichen Elementen umfasst, das in Leseabstand (E) von der inneren (15a) oder äußeren (16a) Spur angeordnet ist, um ein Signal zu liefern, das für die Winkelposition des entsprechenden Codierers (15, 16) repräsentativ ist, wobei die Vorrichtung Vergleichsmittel für die von jedem der Sensoren (19, 20) gelieferten Signale umfasst, um eine Winkelabweichung zwischen den Ringen (5, 6) zu bestimmen, die eine Funktion des aufgebrachten Drehmoments ist;
- ein Gehäuse (21), in dem der Prüfkörper, die Codierer (15, 16) und die Vorrichtung zur Bestimmung untergebracht sind, wobei das Gehäuse eine Außenwand (22) aufweist;
wobei das System **dadurch gekennzeichnet ist, dass** die Außenwand (22) einen Hohlraum (26) aufweist, der eine Aufnahme (27) bildet, in der eine Platine (28) befestigt ist, wobei die Platine der Halterung (18) mittels einer Einstellschraube (29) zugeordnet ist, die angeordnet ist, damit die Drehung der Schraube eine Verschiebung des Trägers in Bezug auf den Prüfkörper bewirkt, um die Einstellung des Leseabstands (E) der Spuren (15a, 16a) durch die jeweiligen Sensoren (19, 20) zu ermöglichen.

2. System zur Bestimmung eines Drehmoments nach Anspruch 1, **dadurch gekennzeichnet, dass** die Einstellschraube (29) durch die Platine (28) hindurch drehbar angeordnet ist, indem sie in der Verschiebung festgestellt ist, wobei die Schraube in der Halterung (18) schraubenförmig montiert ist.

3. System zur Bestimmung eines Drehmoments nach einem der Ansprüche 1 oder 2, **dadurch gekennzeichnet, dass** der Hohlraum (26) mit einer insbesondere dichten Verschlussklappe (35) ausgestattet ist, wobei die Klappe in der Verlängerung der Außenwand (22) angeordnet ist.

4. System zur Bestimmung eines Drehmoments nach einem der Ansprüche 1 bis 3, **dadurch gekennzeichnet, dass** die Einstellschraube (29) einen Betätigungskopf (29a) aufweist, der in der Aufnahme (27) des Hohlraums (26) angeordnet ist, ohne axial über die Außenwand (22) hinauszuragen.

5. System zur Bestimmung eines Drehmoments nach einem der Ansprüche 1 bis 4, **dadurch gekennzeichnet, dass** die Halterung (18) eine Platte (39) umfasst, auf der eine Karte (40) einer gedruckten Schaltung zugeordnet ist, wobei die Einstellschraube (29) der Platte zugeordnet ist.

6. System zur Bestimmung eines Drehmoments nach einem der Ansprüche 1 bis 5, **dadurch gekennzeichnet, dass** die Sensoren (19, 20) um einen radialen Abstand (R_{c}) voneinander beabstandet sind, wobei die Einstellschraube (29) der Halterung (18) in der Mitte des Abstands zugeordnet ist.

7. System zur Bestimmung eines Drehmoments nach einem der Ansprüche 1 bis 6, **dadurch gekennzeichnet, dass** die Platine (28) der Halterung (18) mittels mindestens eines Stifts (43) zugeordnet ist, der angeordnet ist, um den Träger und die Platine gegen eine relative Drehung festzustellen.

8. System zur Bestimmung eines Drehmoments nach Anspruch 7, **dadurch gekennzeichnet, dass** die Platine (28) der Halterung (18) mittels zweier Stifte (43) zugeordnet ist, die auf beiden Seiten der Einstellschraube (29) angeordnet sind, indem sie entlang einer Richtung (D) ausgerichtet sind, die senkrecht zu einer radialen Richtung ist.

9. System zur Bestimmung eines Drehmoments nach einem der Ansprüche 1 bis 8, **dadurch gekennzeichnet, dass** die Platine (28) mindestens eine Druckschraube (46) umfasst, die angeordnet ist, um gegen die Halterung (18) gedrückt zu werden, wenn sie in einem bestimmten Leseabstand (E) positioniert ist.

10. System zur Bestimmung eines Drehmoments nach Anspruch 9, **dadurch gekennzeichnet, dass** zwei Druckschrauben (46) auf beiden Seiten der Einstellschraube (29) angeordnet sind, indem sie entlang einer Richtung (D) ausgerichtet sind, die senkrecht zu einer radialen Richtung ist.

11. System zur Bestimmung eines Drehmoments nach einem der Ansprüche 1 bis 10, **dadurch gekennzeichnet, dass** der Hohlraum (26) eine Öffnung (31) aufweist, die zwei Dichtränder (32) aufweist, wobei die Platine (28) die Öffnung abdeckt, indem sie den Dichträndern zugeordnet ist.

12. System zur Bestimmung eines Drehmoments nach Anspruch 11, **dadurch gekennzeichnet, dass** die Dichtränder (32) jeweils einen Vorsprung (34) aufweisen, der von der Innenwand (37) des Gehäuses (21) erhaben geformt ist.

13. System zur Bestimmung eines Drehmoments nach einem der Ansprüche 1 bis 12, **dadurch gekennzeichnet, dass** die verformbare Struktur eine Gruppe von Schenkeln (10) umfasst, die winkelmäßig zwischen den Ringen (5, 6) verteilt sind.

14. Modul zur Übertragung eines Drehmoments zwischen einer Drehwelle (1a) und einem zweiten Teil (2, 2a), wobei das Modul ein System zur Bestimmung eines Drehmoments nach einem der Ansprüche 1 bis 13 umfasst, bei dem der Innenring (5) eine Bohrung (7) zur Zuordnung um die Drehwelle (1a) herum aufweist, wobei das Modul ein Lager (24) zur drehbaren Montage der Welle durch eine Öffnung (23) des Gehäuses (21) hindurch umfasst.

15. Modul zur Übertragung eines Drehmoments nach Anspruch 14, **dadurch gekennzeichnet, dass** die Welle (1a) einen Ansatz (25) aufweist, der von der Außenwand (22) des Gehäuses (21) vorsteht, wobei der Ansatz mit einer Kurbel (3) zum Aufbringen eines Drehmoments (M+) ausgestattet ist, die gegenüber der Außenwand angeordnet ist.

## Claims

1. A system for determining a torque applied between two rotating members (1, 2) about an axis of rotation (R), said system comprising:
- a test body having an internal ring (5) secured in rotation to means for coupling said test body to a first one amongst the members (1), and an external ring (6) extending around the internal ring (5) while having means for coupling said test body to the second one amongst the members (2), said rings being concentrically linked around the axis (R) by a deformable structure which is arranged to transmit the torque between the members (1, 2) while enabling an angular displacement between said rings according to the torque applied between said members;
- two encoders, respectively an internal one (15) secured in rotation to the internal ring (5) and an external one (16) secured in rotation to the external ring (6), each of said encoders carrying a track (15a, 16a) capable of emitting a periodic signal representative of the rotational displacement of the corresponding ring (5, 6);
- a device for determining the torque comprising a support (18) carrying an internal sensor (19) and an external sensor (20), each of the sensors (19, 20) comprising a pattern of sensitive elements arranged at a reading distance (E) from the internal (15a) or external (16a) track to output a signal representative of the angular position of the corresponding encoder (15, 16), said device comprising means for comparing the signals outputted by each of the sensors (19, 20) to determine an angular offset between the rings (5, 6) which depends on the applied torque;
- a casing (21) in which the test body, the encoders (15, 16) and the determination device are housed, said casing having an outer wall (22);
said system being **characterised in that** the outer wall (22) has a cavity (26) forming a compartment (27) in which a subplate (28) is fastened, said subplate being associated with the support (18) by means of a setting screw (29) which is arranged so that the rotation of said screw induces a translation of said support relative to the test body to enable setting of the reading distance (E) of the tracks (15a, 16a) by the respective sensors (19, 20).

2. The torque determination system according to claim 1, **characterised in that** the setting screw (29) is rotatably arranged throughout the subplate (28) while being immobilised in translation, said screw being mounted in helical connection in the support (18).

3. The torque determination system according to one of claims 1 or 2, **characterised in that** the cavity (26) is equipped with a closure hatch (35), in particular sealed, said hatch being arranged in the continuation of the outer wall (22).

4. The torque determination system according to any one of claims 1 to 3, **characterised in that** the setting screw (29) has an actuating head (29a) which is arranged in the compartment (27) of the cavity (26) without protruding axially beyond the outer wall (22).

5. The torque determination system according to any one of claims 1 to 4, **characterised in that** the support (18) comprises a plate (39) on which a printed circuit board (40) is associated, the setting screw (29) being associated with said plate.

6. The torque determination system according to any one of claims 1 to 5, **characterised in that** the sensors (19, 20) are spaced apart by a radial distance (R_{c}), the setting screw (29) being associated with the support (18) at the middle of said distance.

7. The torque determination system according to any one of claims 1 to 6, **characterised in that** the subplate (28) is associated with the support (18) by means of at least one pin (43) which is arranged so as to immobilise the relative rotation of said support and said subplate.

8. The torque determination system according to claim 7, **characterised in that** the subplate (28) is associated with the support (18) by means of two pins (43) which are arranged on either side of the setting screw (29) while being aligned along a direction (D) which is perpendicular to a radial direction.

9. The torque determination system according to any one of claims 1 to 8, **characterised in that** the subplate (28) comprises at least one pressure screw (46) which is arranged so as to be able to bear on the support (18) when it is positioned at a given reading distance (E).

10. The torque determination system according to claim 9, **characterised in that** two pressing screws (46) are arranged on either side of the setting screw (29) while being aligned along a direction (D) which is perpendicular to a radial direction.

11. The torque determination system according to any one of claims 1 to 10, **characterised in that** the cavity (26) has an opening (31) having two flanges (32), the subplate (28) covering said opening while being associated with said flanges.

12. The torque determination system according to claim 11, **characterised in that** each of the flanges (32) has a boss (34) which is formed in relief on the inner wall (37) of the casing (21).

13. The torque determination system according to any one of claims 1 to 12, **characterised in that** the deformable structure comprises a set of branches (10) angularly distributed between the rings (5, 6).

14. A module for transmitting a torque between a rotating shaft (1a) and a second member (2, 2a), said module comprising a torque determination system according to any one of claims 1 to 13 wherein the internal ring (5) has a mating bore (7) around the rotating shaft (1a), said module comprising a bearing (24) for rotatably mounting said shaft throughout an orifice (23) of the casing (21).

15. The torque transmission module according to claim 14, **characterised in that** the shaft (1a) has an endpiece (25) projecting from the outer wall (22) of the casing (21), said endpiece being equipped with a crank (3) for applying a torque (M+) which is arranged opposite said outer wall.
